# FASCICULE DE BREVET EUROPEEN

(11) **EP 3 175 181 B1**
(45) Date de publication et mention de la délivrance du brevet: **26.09.2018**
(21) Numéro de dépôt: 15752944.7
(22) Date de dépôt: 29.07.2015
(51) Int. Cl.: F24F 3/147, F28D 21/00

(54) **ECHANGEUR ENTHALPIQUE AMELIORE**
VERBESSERTE ENTHALPIETAUSCHER
IMPROVED ENTHALPY EXCHANGER

(30) Priorité: 31.07.2014 FR 1457421
(43) Date de publication de la demande: 07.06.2017
(73) Titulaire: Commissariat à l'Énergie Atomique et aux Énergies Alternatives, 75015 Paris (FR)
(72) Inventeur: MARIOTTO, Mathieu, 38190 Villard-Bonnot (FR)
(74) Mandataire: Brevalex
(86) Numéro de dépôt international: PCT/EP2015/067425
(87) Numéro de publication internationale: WO 2016/016330

(56) Documents cités:
- EP-A1- 1 408 288
- EP-A1- 2 138 792
- EP-A2- 1 312 870
- WO-A1-2012/045717
- DE-A1-102012 024 549
- DE-U1-202008 010 685
- JP-A- 2009 002 575

## Description

L'invention se rapporte au domaine des échangeurs à double flux d'air, du type permettant un transfert thermique ainsi qu'un transfert d'humidité entre les deux flux d'air traversant l'échangeur. Un tel échangeur assurant ce double transfert est également couramment dénommé « échangeur total » ou « échangeur enthalpique ».

L'invention s'applique de préférence au domaine des systèmes de traitement et de conditionnement d'air, pour bâtiments, de l'habitat ou du tertiaire. Dans cette application, l'échangeur garantit un transfert thermique entre le flux d'air vicié et le flux d'air neuf, mais également un transfert d'humidité entre ces deux flux, du milieu le plus humide vers le milieu le plus sec.

L'invention trouve des applications dans d'autres domaines techniques, par exemple dans le domaine cryogénique ou celui de la récupération de chaleur.

De tels échangeurs sont largement connus de l'art antérieur, notamment des documents CA 2 805 541 et WO 2013/091099. Il est également connu le document WO2012/045717, qui se rapporte à un échangeur enthalpique aux performances améliorées, essentiellement grâce à la mise en oeuvre d'alvéoles orientées parallèlement à la direction d'empilement des membranes et des réseaux de circulation d'air intégrant ces alvéoles.

WO2012/045717 décrit un échangeur comportant les caractéristiques du préambule de la revendication 1. Néanmoins, de tels échangeurs doivent être encore davantage optimisés, en particulier en termes de compacité et de performances de transfert thermique.

Pour répondre à ce besoin, l'invention a pour objet un échangeur à double flux d'air, permettant un transfert thermique et un transfert d'humidité entre les deux flux d'air, et comprenant une pluralité de premiers et seconds réseaux de circulation d'air empilés en alternance selon une direction d'empilement et séparés deux à deux par des membranes perméables à la vapeur d'eau et imperméables à l'air et à l'eau liquide, chacun des premiers et seconds réseaux de circulation d'air comprenant des alvéoles chacune définie par une paroi pourvue d'ouvertures pour le passage de l'air, ladite paroi d'alvéole comprenant deux chants opposés au niveau desquels ladite alvéole est ouverte dans la direction d'empilement. Selon l'invention, pour au moins l'un des premiers réseaux de circulation d'air, au moins l'un des deux chants opposés de chaque paroi d'alvéole définit un creux ouvert en direction du second réseau de circulation d'air directement consécutif, lesdits creux logeant une partie de ce second réseau.

Ainsi, l'invention permet de bénéficier de l'ensemble des avantages procurés par la présence des alvéoles au sein des réseaux de circulation d'air, tout en offrant une compacité et des performances de transfert thermique accrues. Effectivement, les creux définis par les chants des parois d'alvéoles permettent une imbrication du second réseau dans le premier réseau, dans la direction d'empilement. Cette imbrication se traduit en effet par une plus grande compacité de l'échangeur, mais également par de meilleures performances thermiques. Ce dernier avantage s'explique par le fait que l'interface d'échange entre les deux flux d'air n'est plus sensiblement plane, mais structurée grâce à la présence judicieuse des creux précités. Cette structuration permet une conception dans laquelle les échanges thermiques ne s'effectuent plus seulement aux extrémités hautes et basses des réseaux dans l'empilement, mais également latéralement. En d'autres termes, les surfaces d'échange thermique ne sont plus des plans parallèles entre eux et orthogonaux à la direction d'empilement, mais des surfaces plus complexes, de section non-droite. D'ailleurs, ces surfaces d'échange thermique peuvent prendre en section la forme de lignes brisées du type signal en triangle, qui, lorsqu'elles sont superposées dans la direction d'empilement, permettent d'aboutir à une conception dite en damier, en quinconce, ou similaire. Ce type de conception favorise avantageusement le rapport entre l'étendue de la surface d'échange et le volume global de l'échangeur.

En outre, il est noté que la présence des alvéoles au sein des réseaux de circulation d'air permet d'optimiser les transferts thermiques entre les deux flux d'air. En effet, les parois d'alvéoles permettent de constituer une surface secondaire d'échange. Cette surface secondaire, provoquant un effet dit « d'ailettes », est d'ailleurs encore augmentée lorsque certaines des faces de ces alvéoles restent non-perforées. En outre, toujours en raison de l'orientation spécifique des alvéoles, c'est-à-dire sensiblement orthogonalement à une direction principale de circulation de l'air dans les réseaux, il se crée une recirculation de fluide qui optimise les échanges convectifs entre le flux d'air et les membranes. Cette recirculation peut être adaptée en fonction des besoins rencontrés, en choisissant judicieusement les faces des alvéoles à perforer, et celles à conserver. Les obstacles créés par les parois d'alvéoles évitent également la formation d'une couche limite dans le flux.

L'invention est également remarquable en ce qu'elle permet de favoriser le transfert d'humidité entre les deux flux d'air, en gardant une grande partie des membranes actives. En effet, chaque membrane perméable à la vapeur d'eau et imperméable à l'air et à l'eau liquide est seulement au contact des chants des alvéoles, ce qui ménage une surface utile restante importante pour le transfert de vapeur d'eau.

La tenue mécanique de l'échangeur s'avère par ailleurs très satisfaisante, grâce à l'emploi de structures en nid d'abeilles et à l'orientation spécifique de ses alvéoles. Le maintien des membranes et des réseaux, relativement les uns aux autres, est également facilité par la présence des creux. Ce maintien amélioré assure une meilleure étanchéité ainsi qu'une durée de vie accrue pour les membranes.

L'invention présente par ailleurs au moins l'une des caractéristiques optionnelles suivantes, prises isolément ou en combinaison.

Pour au moins l'un des seconds réseaux de circulation d'air, au moins l'un des deux chants opposés de chaque paroi d'alvéole définit un creux ouvert en direction du premier réseau de circulation d'air directement consécutif, lesdits creux logeant une partie de ce premier réseau. Cette spécificité permet d'augmenter encore davantage l'imbrication des réseaux, pour l'obtention d'une plus grande compacité et de meilleures performances de transfert thermique.

Les deux chants opposés, de chaque paroi d'alvéole d'au moins l'un des réseaux de circulation, définissent chacun un creux ouvert en direction du réseau directement consécutif, et logeant une partie de ce réseau directement consécutif. Dans cet agencement préféré, le réseau concerné permet une imbrication avec les deux réseaux situés de part et d'autre de celui-ci. Cela augmente encore la compacité et l'efficacité de transfert thermique. De préférence, cette double imbrication est retenue pour tous les réseaux de l'échangeur, à l'exception bien entendu du premier et du dernier réseau de l'empilement.

Les premiers et seconds réseaux de circulation d'air présentent des structures identiques, et pour au moins un premier et un second réseau directement consécutifs dans l'empilement, la structure du premier réseau est décalée de la structure du second réseau dans le plan orthogonal à la direction d'empilement, pour permettre aux creux du premier réseau de loger une partie du second réseau, et réciproquement. L'identité de structure des réseaux permet de faciliter la fabrication de l'échangeur. Le décalage désiré entre deux réseaux directement consécutifs peut par exemple être obtenu à l'aide de deux éléments identiques formant les réseaux, ces deux éléments étant alors placés dans un sens puis dans l'autre dans l'empilement.

De préférence, chaque premier et second réseau de circulation d'air est réalisé à partir d'une maille qui est répétée, la maille comprenant ladite paroi d'alvéole, et comprenant également de préférence une tige de jonction des alvéoles. Comme évoqué ci-dessus, la maille est préférentiellement identique pour les premiers et seconds réseaux de circulation d'air, afin d'obtenir les mêmes structures pour ces réseaux.

Chaque premier et second réseau de circulation d'air présente un plan de symétrie orthogonal à la direction d'empilement, même s'il pourrait en être autrement, sans sortir du cadre de l'invention.

Les alvéoles sont de préférence cylindriques de section non circulaire et d'axes parallèles à ladite direction d'empilement.

De préférence, ladite paroi d'alvéole présente une forme globale hexagonale lorsqu'elle est vue selon la direction d'empilement. D'autres formes sont possibles, notamment d'autres formes polygonales en vue selon la direction d'empilement, sans sortir du cadre de l'invention.

Avec cette forme générale hexagonale, ladite paroi d'alvéole présente six faces, dont deux faces opposées agencées sensiblement parallèlement à une direction principale de circulation de l'air à travers le réseau concerné, et deux couples de deux faces traversées par l'air, les deux couples étant reliés par lesdites deux faces opposées.

Lesdites faces opposées des alvéoles, parallèles à la direction principale de circulation de l'air, se succèdent donc selon cette même direction, en étant espacées les unes des autres. Cette intermittence, dans la direction principale de circulation d'air, permet non seulement d'assurer un maintien mécanique de la structure de l'échangeur, mais elle permet également de remplir une fonction d'amélioration des transferts thermiques, par une action répétée de génération de turbulences. Cette génération de turbulence est non seulement propice à la création d'une zone de recirculation, mais permet aussi de limiter les risques de création d'une couche limite qui pourrait nuire à l'efficacité de l'échange thermique.

De préférence, chaque couple précité comporte deux faces de forme globale triangulaire, les deux faces étant reliées l'une à l'autre par l'un de leurs sommets. Cet agencement est particulièrement propice à l'obtention d'une configuration dite en damier ou en quinconce, avec les sommets précités correspondant aux noeuds du damier.

De préférence, la tige de la maille est reliée audit sommet, à partir duquel elle fait saillie de préférence dans un plan orthogonal à la direction d'empilement.

De préférence, lesdites deux faces opposées de la paroi d'alvéole sont pleines ou ajourées. Le caractère plein de ces faces permet de renforcer la tenue mécanique et les échanges thermiques. Cependant, la mise en oeuvre d'ouvertures au sein de ces faces opposées, parallèles à la direction principale de circulation de l'air, permet de limiter les pertes de charges. Un compromis peut naturellement être trouvé, en fonction des besoins rencontrés.

L'échangeur comprend, associés à chaque réseau de circulation, un distributeur d'air ainsi qu'un collecteur d'air, lesdits distributeurs et collecteurs étant empilés selon ladite direction d'empilement. Dans le cas d'une conception à contre-courant, les distributeurs et les collecteurs sont empilés en alternance. De chaque côté de l'empilement des réseaux, les distributeurs et les collecteurs peuvent être réalisés à l'aide d'éléments identiques placés alternativement dans un sens puis dans l'autre dans l'empilement.

Comme évoqué ci-dessus, l'échangeur est configuré pour que la circulation de l'air à l'intérieur de l'échangeur s'effectue de préférence à contre-courant, ou à co-courant. Une solution à courant croisés est envisageable, mais pas préférée.

Lesdites membranes sont de préférence réalisées en matériau polymère ou en papier, tandis que lesdits réseaux sont de préférence métalliques, mais peuvent également être réalisés en matériau polymère.

Enfin, l'invention a également pour objet un système de traitement et de conditionnement d'air comprenant un échangeur tel que décrit ci-dessus.

D'autres avantages et caractéristiques de l'invention apparaîtront dans la description détaillée non limitative ci-dessous.

Cette description sera faite au regard des dessins annexés parmi lesquels;
- la figure 1 représente une vue schématique de face d'un système de traitement et de conditionnement d'air comprenant un échangeur à double flux d'air selon la présente invention ;
- la figure 2 représente, de manière plus détaillée, une vue schématique en perspective de l'échangeur montré sur la figure 1 ;

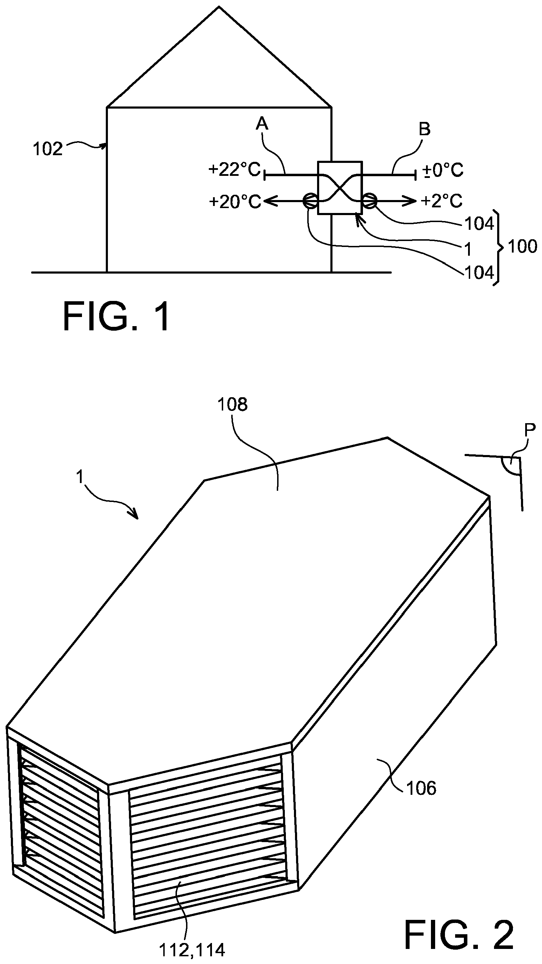

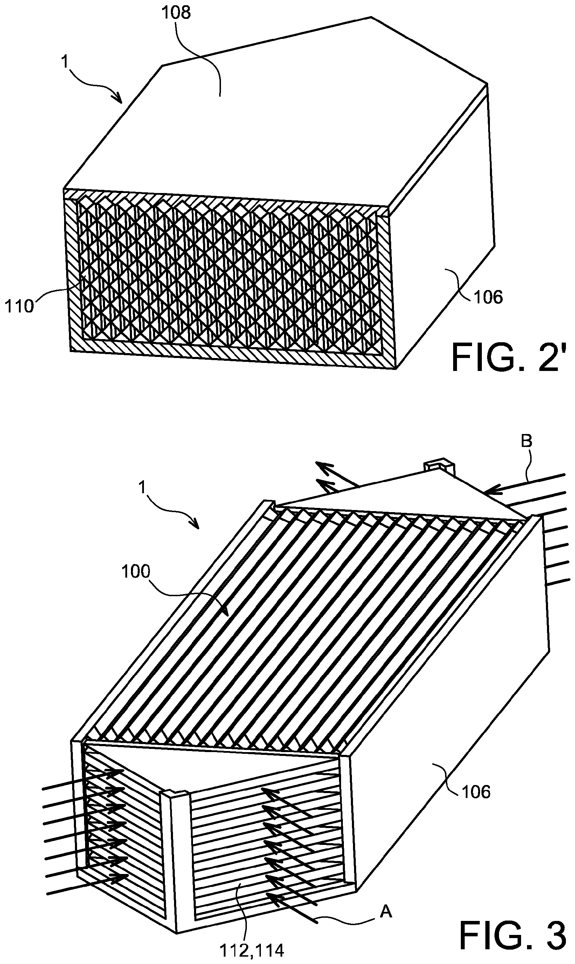

- la figure 2' est une vue de l'échangeur montré sur la figure précédente, coupé par un plan en son centre ;
- la figure 3 est une vue en perspective de l'échangeur montré sur les figures précédentes, sans son couvercle ;

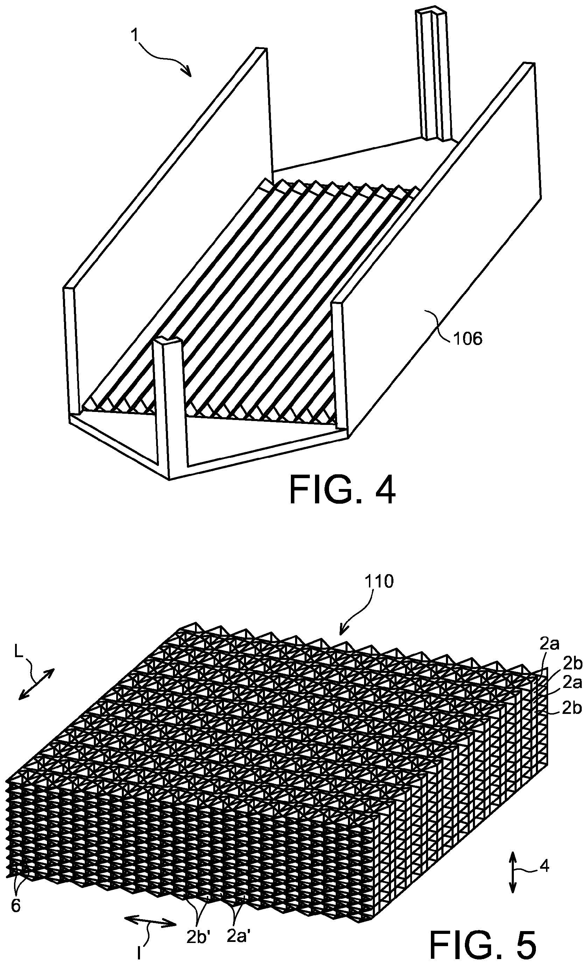

- la figure 4 est une vue en perspective du boîtier extérieur de l'échangeur montré sur les figures précédentes ;
- la figure 5 représente une vue en perspective d'un empilement de membranes et de réseaux de circulation d'air, cet empilement étant logé dans le boîtier montré sur la figure précédente ;

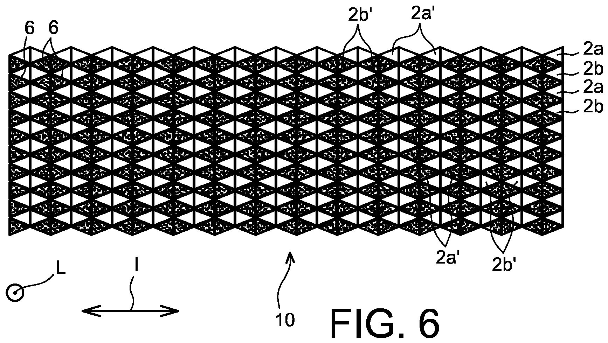

- la figure 6 est une vue de l'empilement montré sur la figure précédente, vu selon la direction de la longueur de cet empilement ;

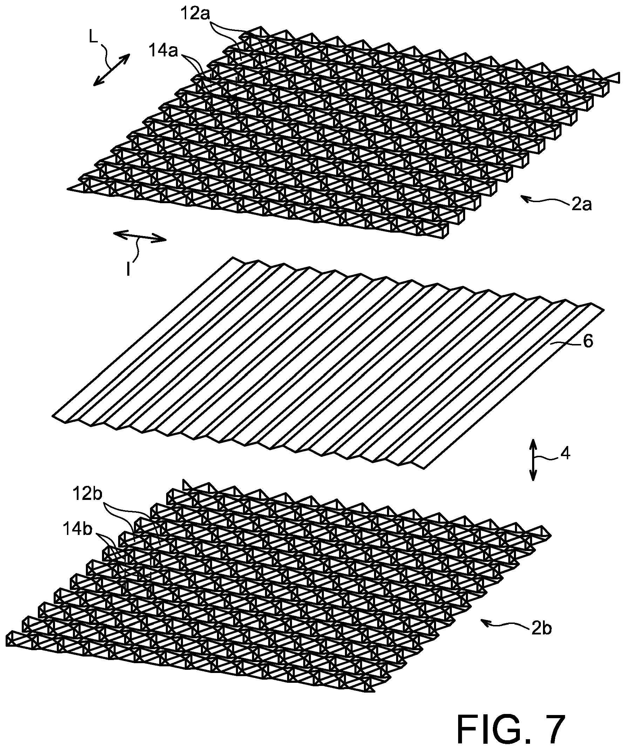

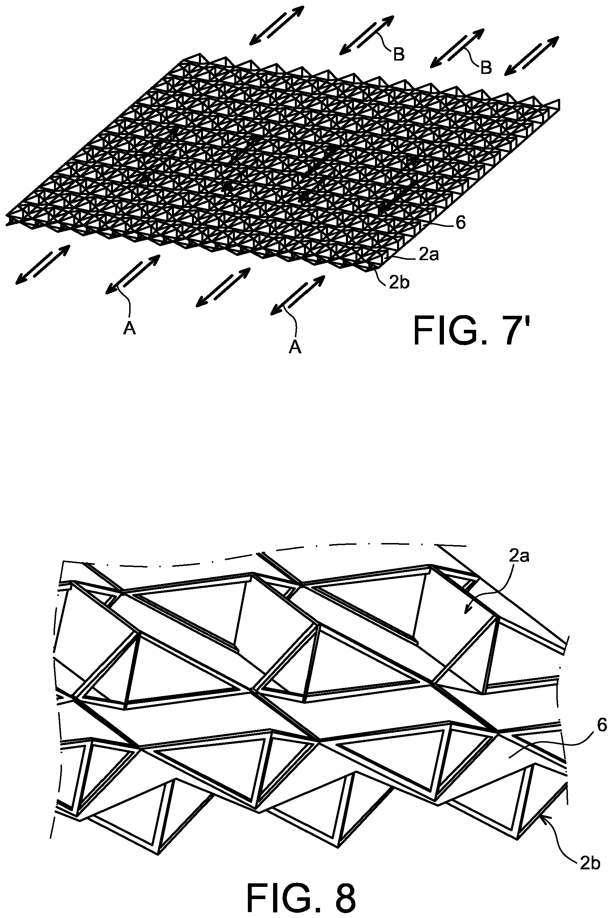

- la figure 7 représente une vue éclatée en perspective d'un ensemble comprenant un premier et un second réseau de circulation d'air, entre lesquels est agencée une membrane ;
- la figure 7' est une vue en perspective de l'ensemble montré sur la figure précédente ;
- la figure 8 est une vue en perspective plus détaillée d'une partie de l'ensemble montré sur la figure précédente ;

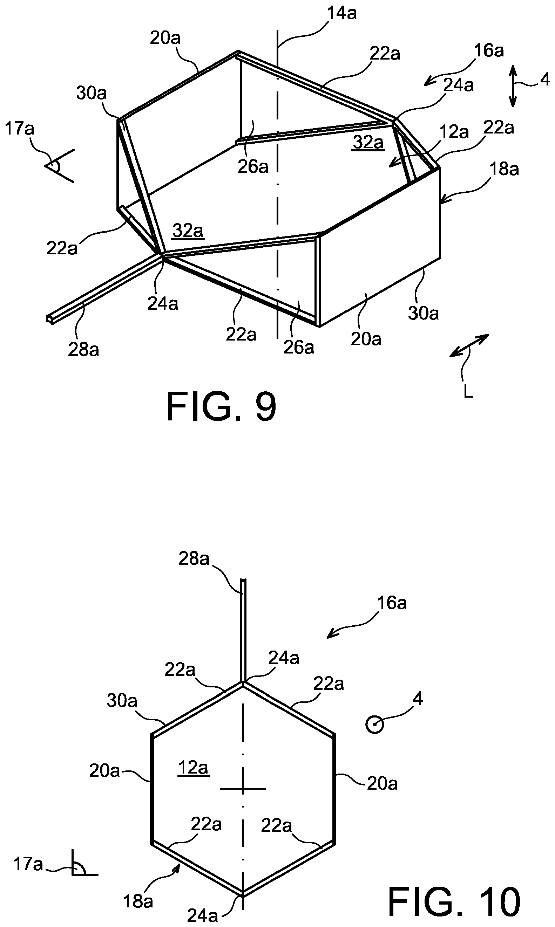

- la figure 9 est une vue en perspective d'une maille pour la formation des réseaux de circulation d'air montrés sur les figures précédentes ;

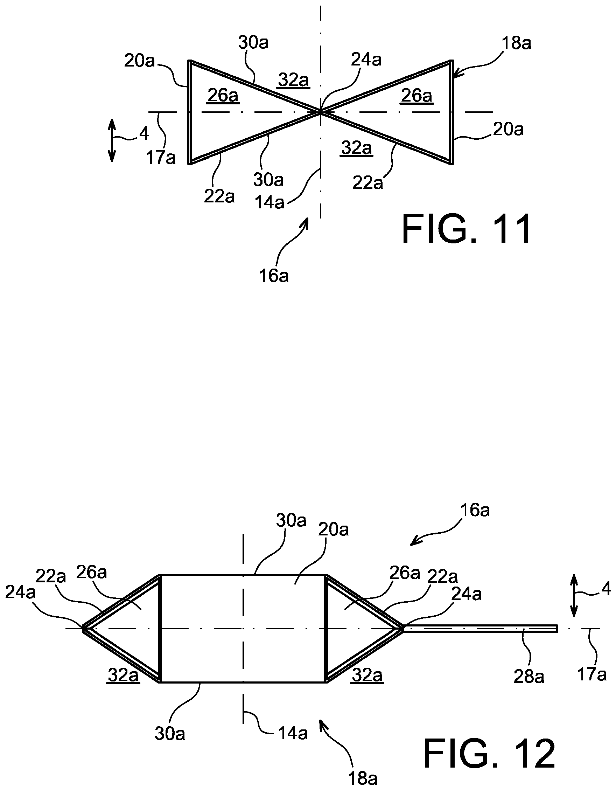

- les figures 10 à 12 montrent la maille de la figure précédente dans différentes vues ;

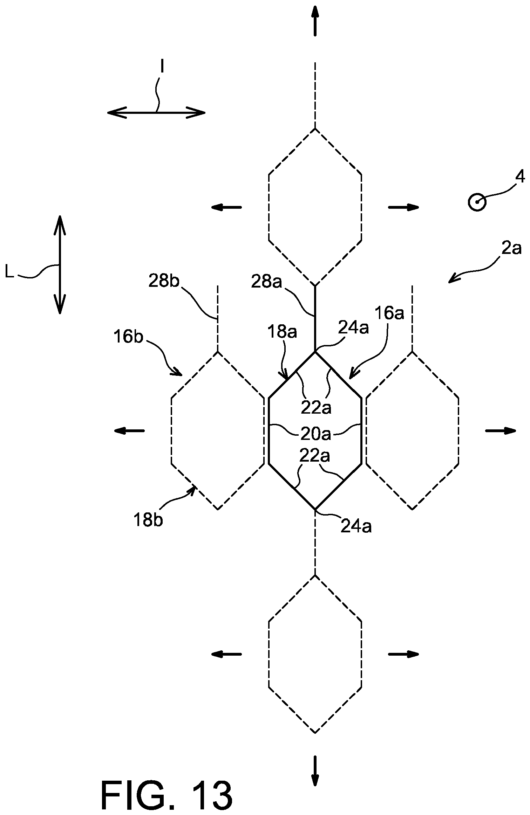

- la figure 13 est une vue de dessus montrant, de manière schématique, la formation d'un réseau à l'aide de la maille montrée sur les figures précédentes ;

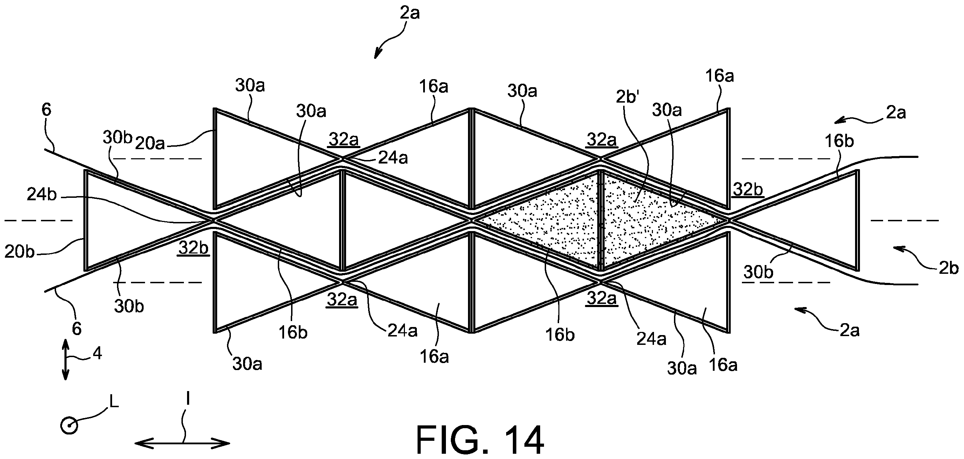

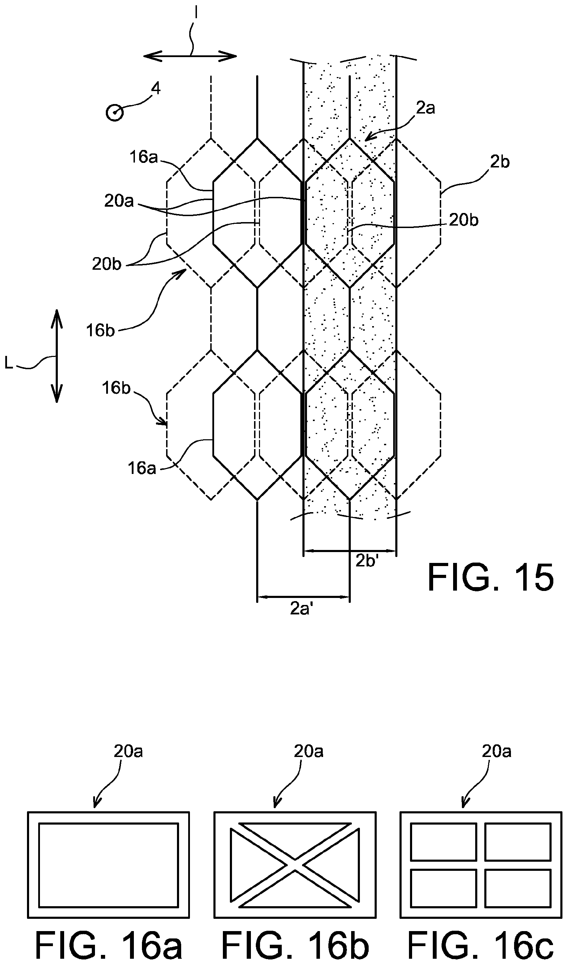

- les figures 14 et 15 montrent de façon plus détaillée la coopération entre les différents réseaux de circulation d'air, respectivement en vue de face et en vue de dessus ;
- les figures 16a à 16c montrent des géométries possibles pour certaines faces de la paroi des alvéoles formant les réseaux de circulation d'air ;

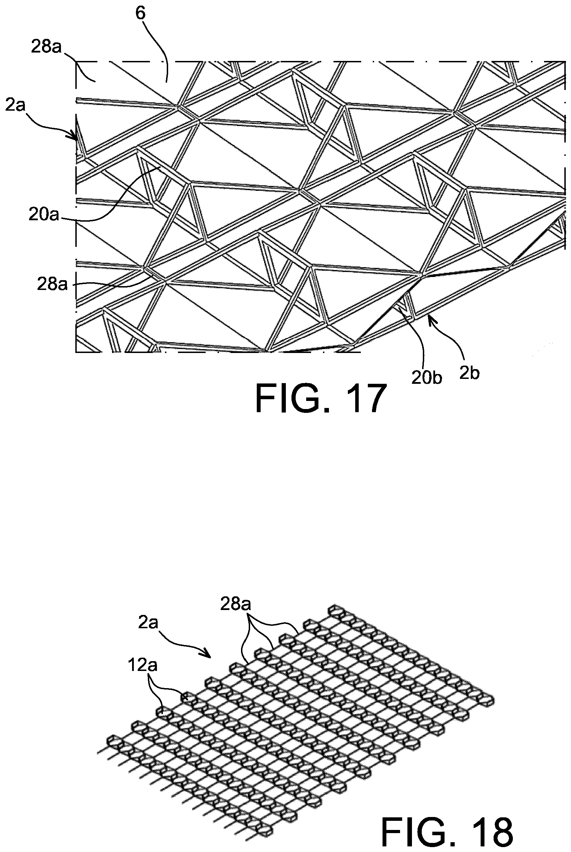

- la figure 17 montre une vue similaire à celle de la figure 8, avec les réseaux de circulation d'air comprenant des faces d'alvéoles du type de celle montrée sur la figure 16a ;
- la figure 18 représente une vue en perspective de l'un des réseaux de circulation d'air, avec une maille équipée d'une tige de jonction de dimension plus longue comparativement à celle montrée sur les figures précédentes ;

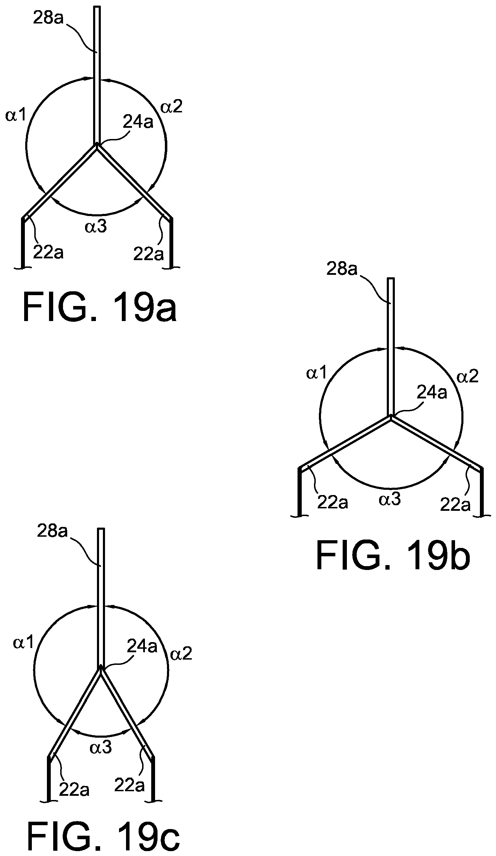

- les figures 19a à 19c montrent différentes réalisations possibles pour la paroi d'alvéole ;

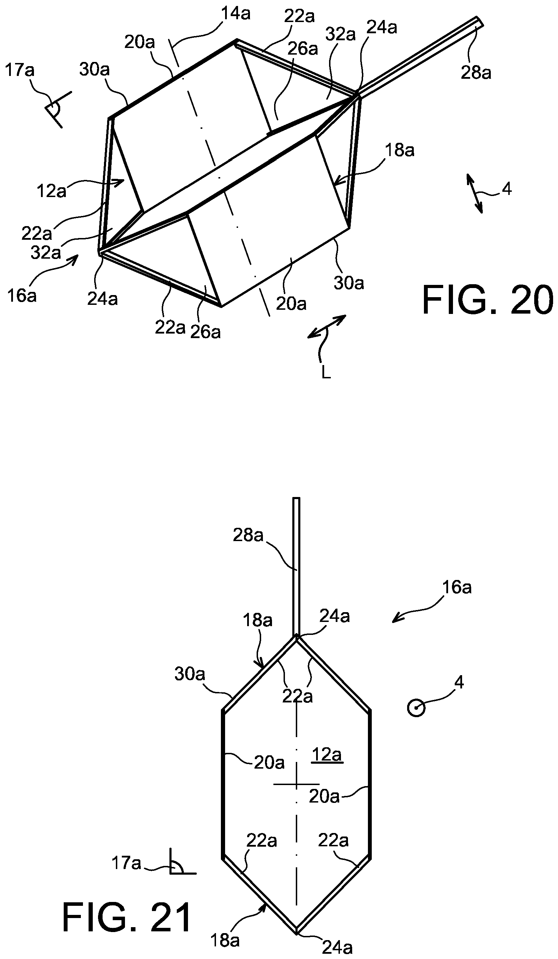

- la figure 20 est une vue en perspective d'une maille pour la formation des réseaux de circulation d'air, la maille se présentant sous la forme d'un autre mode de réalisation préféré ;

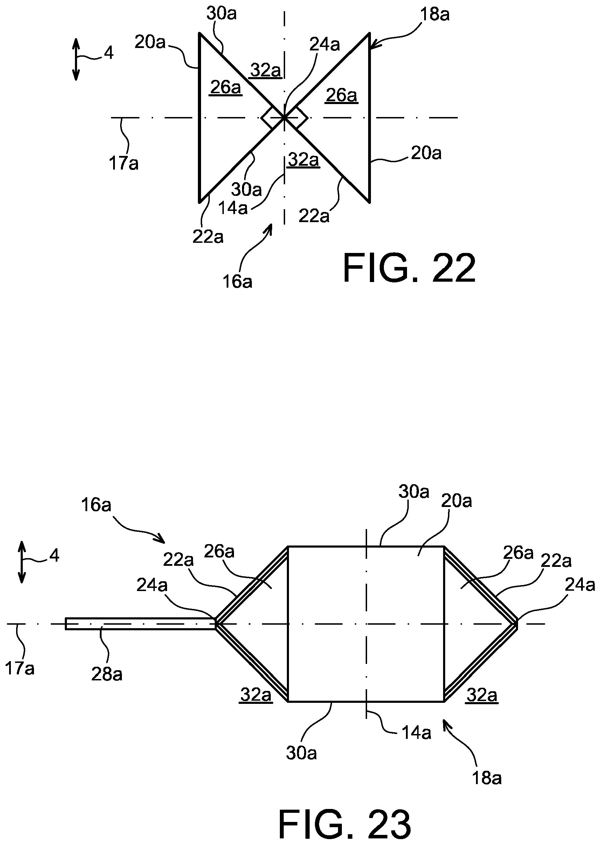

- les figures 21 à 23 montrent la maille de la figure précédente dans différentes vues ;

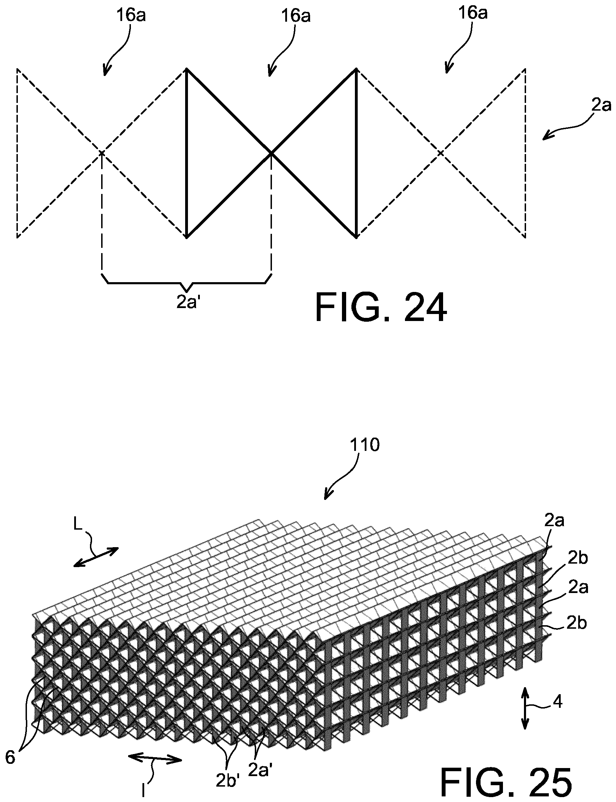

- la figure 24 représente une vue schématique de face de plusieurs mailles adjacentes d'un même réseau de circulation de fluide ;
- la figure 25 représente une vue en perspective d'un empilement de membranes et de réseaux de circulation d'air, cet empilement étant réalisé à l'aide de réseaux tel que celui montré sur la figure 24 ;

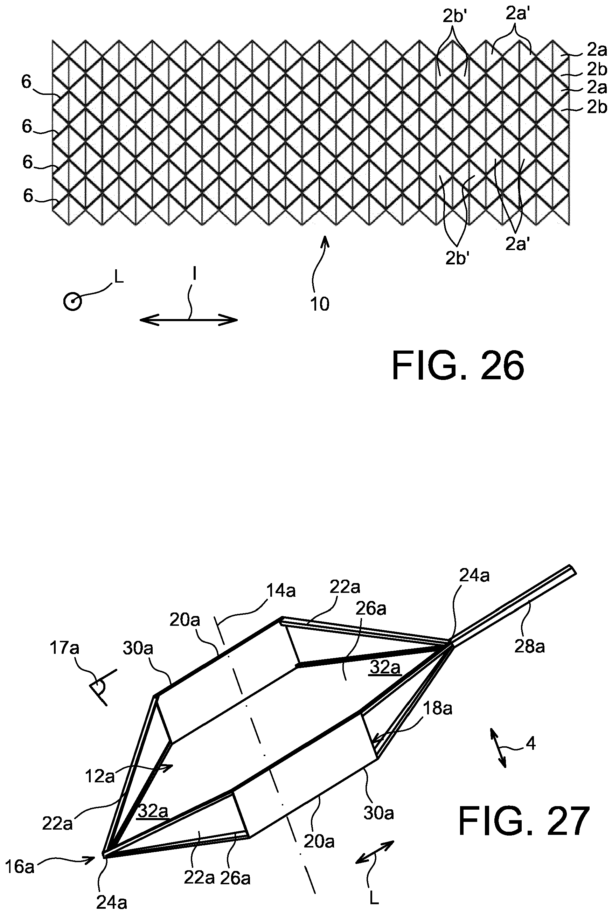

- la figure 26 est une vue de l'empilement montré sur la figure précédente, vu selon la direction de la longueur de cet empilement ;
- la figure 27 est une vue en perspective d'une maille pour la formation des réseaux de circulation d'air, la maille se présentant sous la forme d'un autre mode de réalisation préféré ;

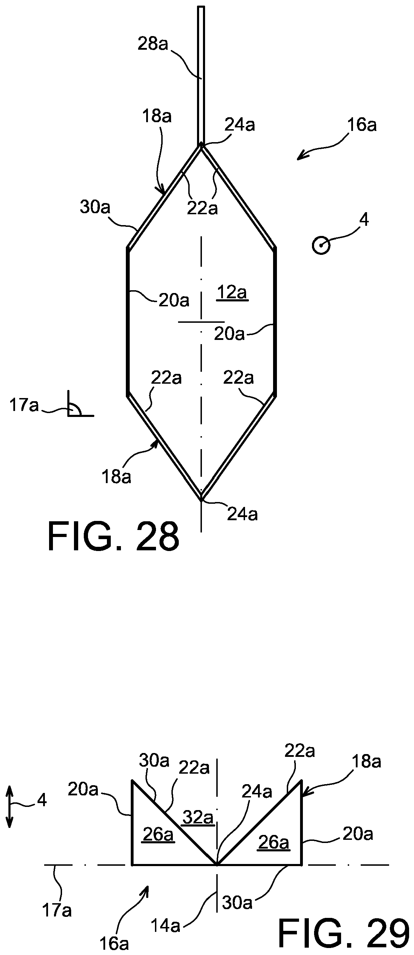

- les figures 28 à 30 montrent la maille de la figure précédente dans différentes vues ;

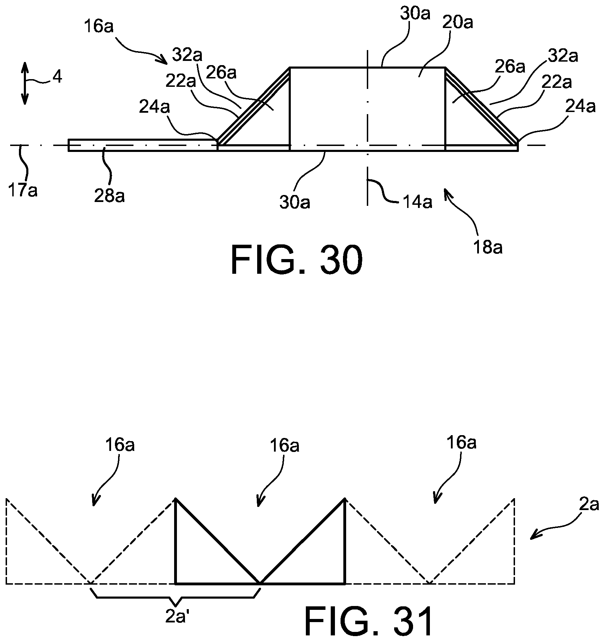

- la figure 31 représente une vue schématique de face de plusieurs mailles adjacentes d'un même réseau de circulation de fluide ;

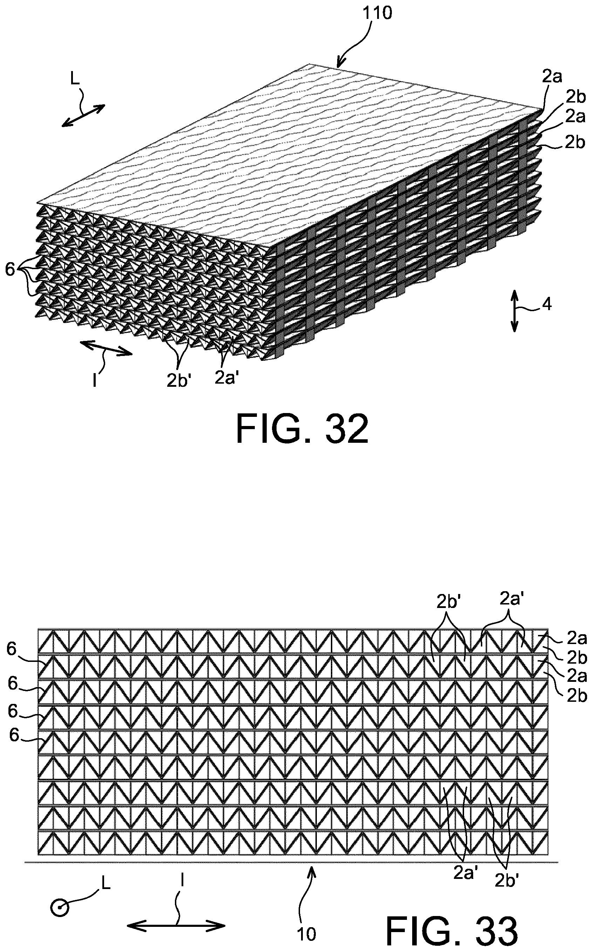

- la figure 32 représente une vue en perspective d'un empilement de membranes et de réseaux de circulation d'air, cet empilement étant réalisé à l'aide de réseaux tel que celui montré sur la figure 31 ;
- la figure 33 est une vue de l'empilement montré sur la figure précédente, vu selon la direction de la longueur de cet empilement ;

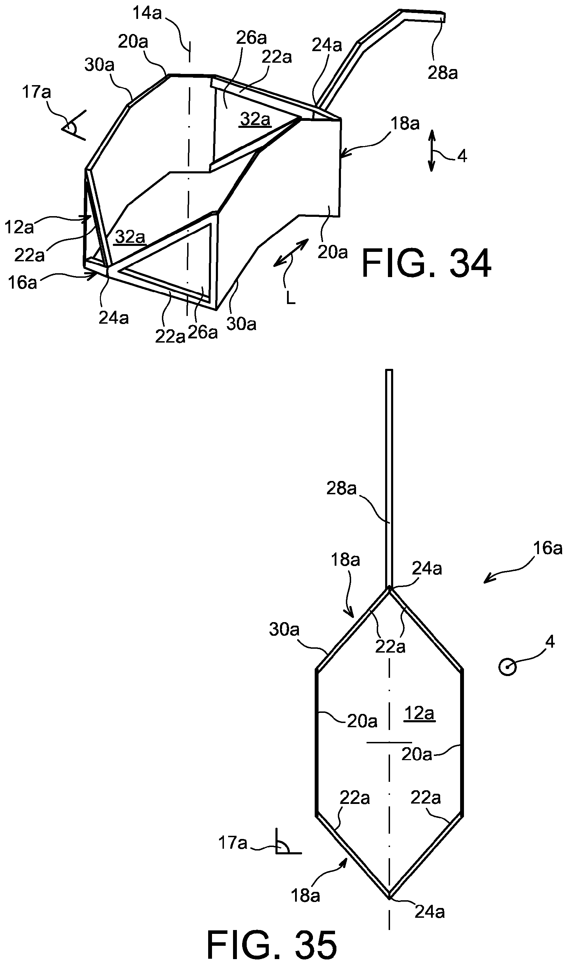

- la figure 34 est une vue en perspective d'une maille pour la formation des réseaux de circulation d'air, la maille se présentant selon encore un autre mode de réalisation préféré ;
- les figures 35 à 37 montrent la maille de la figure précédente dans différentes vues ;

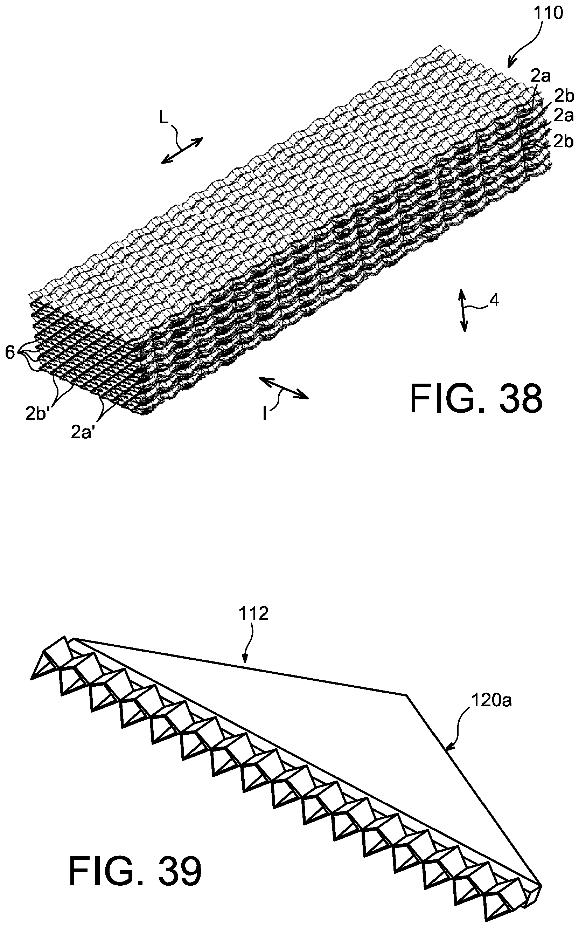

- la figure 38 représente une vue en perspective d'un empilement de membranes et de réseaux de circulation d'air obtenus à l'aide de la maille montrée sur les figures 34 à 37 ;

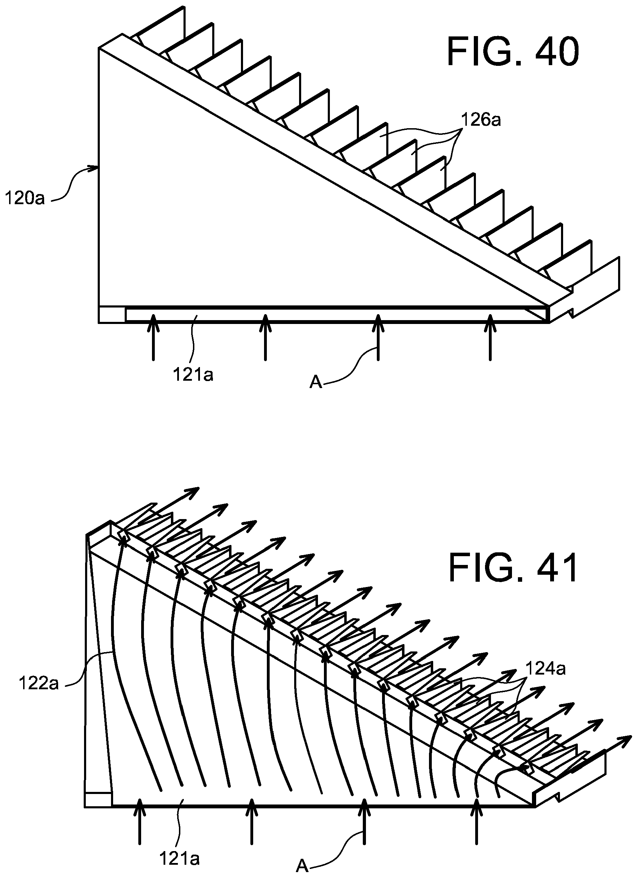

- les figures 39 et 40 représentent des vues en perspective de l'un des distributeurs d'air équipant l'un des réseaux de l'empilement, selon deux angles de vue distincts ;
- la figure 41 est une vue similaire à celle de la figure 40, en étant coupée selon un plan traversant les passages d'air ;

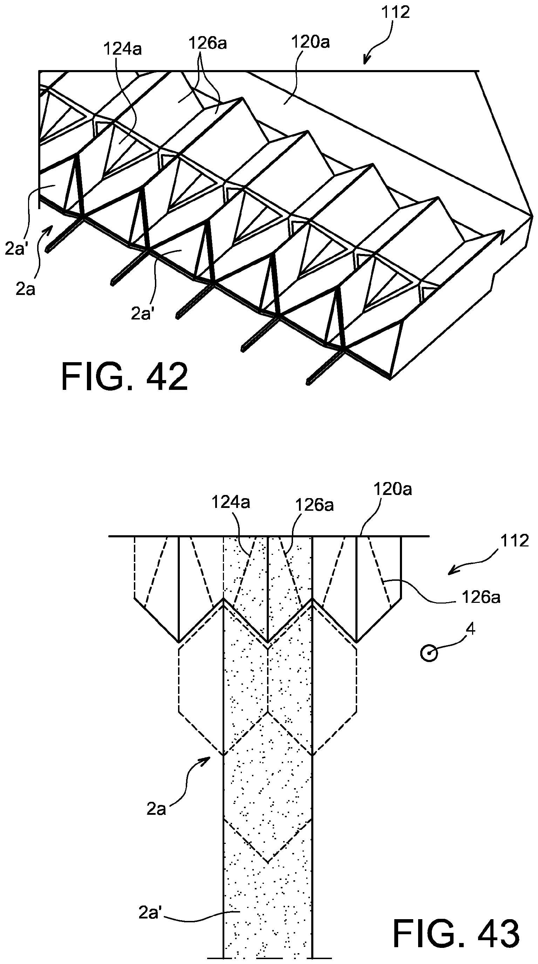

- la figure 42 représente une vue en perspective l'assemblage du distributeur avec son réseau associé ;
- la figure 43 est une vue partielle de celle de la figure précédente, en vue de dessus ;

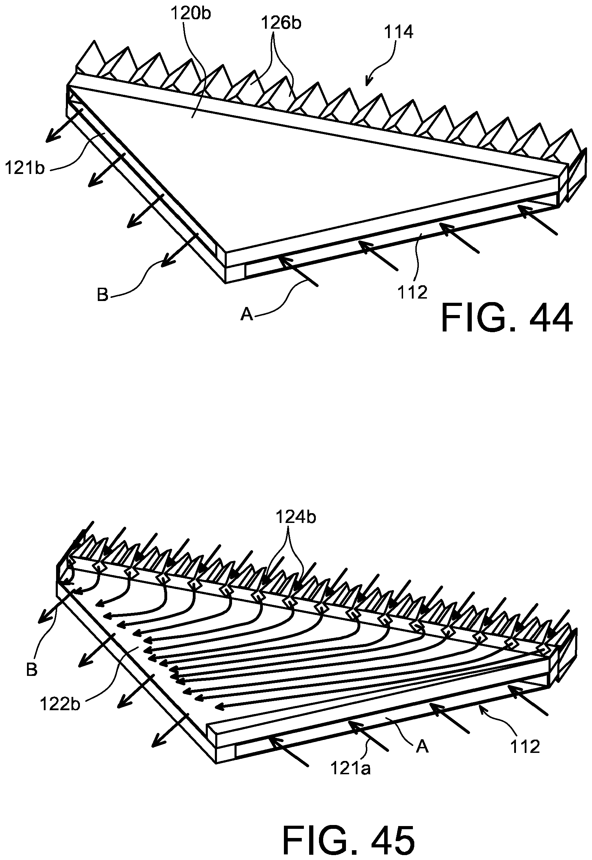

- les figures 44 et 45 représentent des vues en perspective d'un distributeur et d'un collecteur d'air empilés, équipant respectivement deux réseaux consécutifs de l'empilement, selon deux angles de vue distincts ; et

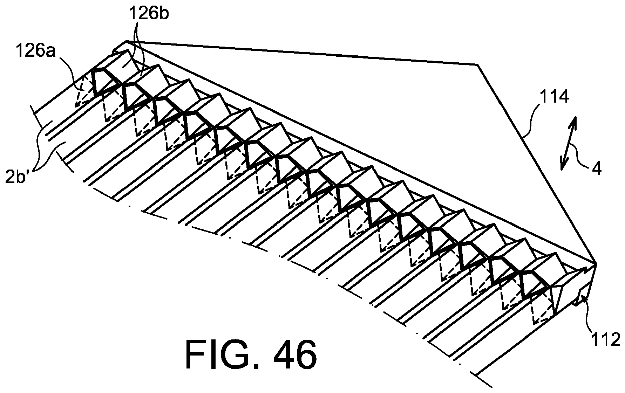

- la figure 46 représente une vue en perspective l'assemblage du distributeur et du collecteur avec leurs réseaux associés.

En référence tout d'abord à la figure 1, il est représenté un système de traitement et de conditionnement d'air 100, équipant un bâtiment 102. Ce système 100 comprend en particulier un échangeur à double flux d'air 1, propre à la présente invention. Ici, l'échangeur 1 garantit un transfert thermique entre le flux d'air vicié A sortant du bâtiment 102, et le flux d'air neuf B entrant dans ce même bâtiment. En d'autres termes, en plus de renouveler l'air du bâtiment 102, le système 100, grâce à son échangeur de chaleur 1, permet de récupérer la chaleur ou la fraîcheur contenue dans l'air vicié A évacué du logement, et de la fournir au flux d'air neuf entrant B. Le système 100 permet donc d'éviter le gâchis d'énergie pour le chauffage ou la climatisation du bâtiment 102.

A titre d'exemple, le flux d'air vicié A peut présenter une température de 22°C avant de sortir du bâtiment, et le flux d'air neuf B peut présenter une température de 0°C avant d'entrer dans le bâtiment. Après transfert thermique dans l'échangeur, le flux B peut atteindre 20°C en sortant de l'échangeur et en entrant dans le bâtiment, et le flux A peut être refroidi à une température de 2°C en sortant de l'échangeur et du bâtiment. Dans ce cas de figure, en mode chauffage, l'air entrant est froid et sec, et l'échangeur permet d'humidifier et de préchauffer cet air sec entrant à des conditions de confort thermique acceptables. Dans le même temps, l'air vicié se refroidit et se décharge d'une partie de son humidité.

Néanmoins, d'autres modes de fonctionnement sont possibles. Tout d'abord, en mode climatisation avec l'air entrant chaud et humide, l'échangeur permet de déshumidifier et de rafraichir cet air entrant à des conditions de confort thermique acceptables. L'air vicié se réchauffe et se charge d'humidité. En outre, en mode climatisation avec l'air entrant chaud et sec, l'échangeur permet d'humidifier et de rafraichir l'air entrant à des conditions de confort thermique acceptables. En effet, l'air vicié se réchauffe et se décharge ici d'une partie de son humidité.

Pour permettre la circulation des flux A et B, le système 100 est complété par deux ventilateurs 104, représentés schématiquement sur la figure 1.

Comme évoqué ci-dessus, l'échangeur 1 est donc aussi conçu pour assurer un transfert d'humidité entre ces deux flux A et B, du milieu le plus humide vers le milieu le plus sec. Cet échangeur 1 est donc qualifié d'échangeur total ou encore d'échangeur enthalpique.

Sur les figures 2 à 4, il a été représenté l'échangeur 1, qui comprend un boîtier extérieur 106 fermé par un couvercle 108, ces deux éléments formant un espace dans lequel est logé le coeur de l'échangeur. Ce consiste en un empilement 110 de membranes et de réseaux de circulation d'air, comme cela sera détaillé ci-après. De plus, de part et d'autre de l'empilement 110, il est prévu des distributeurs et collecteurs d'air coopérant avec les réseaux, de manière à assurer la distribution et la collecte des deux flux d'air A et B. Les distributeurs et les collecteurs, dont la conception sera détaillée ultérieurement, portent les références numériques 112, 114 sur les figures 2 et 3.

En référence à présent aux figures 5 à 8, il est détaillé la conception de l'empilement 110 formant le de l'échangeur. Cet empilement 110 comporte une pluralité de premiers et seconds réseaux de circulation d'air 2a, 2b, empilés les uns sur les autres selon une direction d'empilement 4. Les réseaux 2a, 2b sont agencés en alternance selon la direction 4, et respectivement prévus pour la circulation du flux vicié A et la circulation du flux neuf entrant B, comme cela a été schématisé par les flèches sur la figure 7'. L'échangeur est à contre-courant, à savoir que le sens d'écoulement du flux A au sein des réseaux 2a est sensiblement opposé au sens d'écoulement du flux B au sein des réseaux 2b.

Entre les réseaux 2a et 2b directement consécutifs dans la direction 4, il est prévu une membrane polymère 6 perméable à la vapeur d'eau et imperméable à l'air et à l'eau liquide. C'est donc à travers ces membranes 6 séparant les réseaux deux à deux qu'il se produit le transfert d'humidité entre les deux flux A et B. De telles membranes 6 sont également dénommées « membranes imper-respirantes ».

Les membranes 6 interposées entre les réseaux 2a, 2b sont donc portées par ces derniers. Comme indiqué précédemment, l'empilement 110 est inséré dans le boîtier 106 de l'échangeur pour en permettre le maintien, et des joints d'étanchéité conventionnels sont placés à la périphérie de l'empilement 110 pour assurer l'étanchéité et interdire la communication entre les réseaux 2a et les réseaux 2b.

Dans ce mode de réalisation préféré, chaque membrane 6 présente une section transversale uniforme, définissant une ligne brisée du type signal en triangle. En d'autres termes, en section selon un plan de coupe orthogonal à la longueur « L » de l'empilement 110, chaque membrane 6 présente en alternance, selon la largeur « l » de cet empilement, des creux et des saillies en forme de triangle.

De plus, deux membranes 6 directement consécutives dans l'empilement sont décalées d'une demi-période selon la largeur « l », de façon à ce que les sommets des triangles se retrouvent en regard deux à deux selon la direction d'empilement 4, comme cela est parfaitement visible sur la figure 6. Les sommets sont ici très proches les uns des autres, ce qui conduit à la formation d'une conception du type en damier. Dans ce type de conception, en coupe selon un plan orthogonal à la longueur « L » de l'empilement 110, les membranes empilées 6 définissent des canaux en losange qui, ensemble, forment une sorte de damier.

Plus précisément, chaque premier réseau 2a présente des canaux 2a' en forme de losange, ces canaux étant agencés bout-à-bout selon la direction « l », en étant reliés par leurs sommets. D'une manière analogue, chaque second réseau 2b présente des canaux 2b' en forme de losange, ces canaux étant aussi agencés bout-à-bout selon la direction « l », en étant reliés par leurs sommets. L'un des avantages de cette configuration du type en damier réside dans le fait que chaque canal 2a' est au contact de quatre canaux 2b' au niveau de ses quatre côtés, dont deux canaux 2b' appartenant au réseau 2b directement supérieur dans l'empilement, et dont deux autres canaux 2b' appartenant au réseau 2b directement inférieur dans l'empilement. Il en est bien évidemment de même pour tout canal 2b', qui est au contact de quatre canaux 2a' au niveau de ses quatre côtés. Avec cet agencement, la surface d'échange est augmentée, et la compacité améliorée. Il est par ailleurs noté qu'il n'est pas expressément recherché une étanchéité entre les différents canaux d'un même réseau, de l'air pouvant en effet passer de l'un à l'autre en passant par l'endroit où les membranes se rapprochent fortement, à savoir au niveau de leurs sommets formant les noeuds du damier.

Il est noté que cette conception du type en damier peut également être observée en vue selon la direction « L » telle que celle de la figure 6, la direction « L » correspondant également à la direction principale d'écoulement de l'air à travers les réseaux ainsi qu'à la direction d'étendue des canaux 2a' et 2b'.

Les réseaux 2a, 2b présentent des structures identiques, réalisées à partir d'une même maille répétée dans le plan de chaque réseau concerné. Comme cela est visible sur les figures 5 à 8, les structures des réseaux 2a, 2b consistent essentiellement en des alvéoles 12a, 12b, d'axes 14a, 14b parallèles à la direction d'empilement 4. Ces alvéoles sont cylindriques de section non circulaire, ouvertes de part et d'autre dans la direction d'empilement 4. Plus précisément, chaque alvéole 12a, 12b prend ici une forme globale hexagonale lorsqu'elle est vue selon la direction d'empilement 4. Néanmoins, l'épaisseur de l'alvéole selon la direction 4 n'est pas uniforme, et ce pour permettre de s'adapter à la forme complexe en creux et saillies triangulaires des membranes 6, comme cela va maintenant être décrit en référence aux figures 9 à 12.

En effet, ces figures montrent la maille 16a permettant la fabrication du premier réseau 2a. Comme indiqué ci-dessus, la maille est la même pour la fabrication du second réseau 2b, de structure identique. Aussi, seule la maille 16a sera décrite ci-après. D'ailleurs, il est noté que dans toute la suite de la description, et sur les figures, les éléments portant des références numériques terminant par la lettre « b » correspondent à des éléments de la maille du réseau 2b, identiques aux éléments de la maille du réseau 2a portant les mêmes références numériques, et suivies de la lettre « a ».

La maille 16a présente un plan de symétrie 17a qui est orthogonal à la direction 4, et donc également orthogonal à l'axe 14a. Ce plan de symétrie 17a constitue donc un plan de symétrie pour l'ensemble du réseau 2a, après répétition des mailles 16a.

La maille 16a comporte une paroi d'alvéole 18a définissant l'alvéole 12a précitée. Pour aboutir à la forme générale hexagonale, la paroi d'alvéole 18a comporte six faces planes, parallèles à la direction 4. Il s'agit tout d'abord de deux faces opposées 20a agencées sensiblement parallèlement à la direction principale de circulation de l'air à travers le réseau concerné, c'est-à-dire selon la direction « L » selon laquelle s'étendent également les canaux. Il s'agit ensuite de deux couples de deux faces 22a traversées par l'air, et donc étant ajourées autant que possible, afin de limiter les pertes de charges. Bien entendu, les deux couples de faces 22a sont reliés l'un à l'autre par les deux faces opposées 20a.

Les faces 22a sont chacune sensiblement triangulaires, reliées deux à deux par l'un de leurs sommets 24a. Aussi, pour l'obtention de la forme triangulaire et du caractère ajouré, chaque face 22a présente une base correspondant à la tranche de la face adjacente 20, et deux armatures droites formant respectivement les deux côtés du triangle convergeant vers le sommet 24a avec l'autre face 22a du couple. Les deux sommets 24a se trouvent alors sur le plan de symétrie 17a, au niveau des futurs noeuds du damier. Les armatures permettent quant à elles de définir des ouvertures 26a pour le passage de l'air à l'entrée de l'alvéole dans la direction « L », et à la sortie de l'alvéole dans cette même direction.

La paroi d'alvéole 18a présente deux chants opposés 30a aux niveaux desquels l'alvéole est ouverte dans la direction d'empilement 4. Ces chants 30a sont également dénommés arêtes, ou tranches. L'une des particularités de l'invention réside dans le fait de structurer ces chants, de manière à ce qu'ils ne soient plus respectivement inscrits dans deux plans parallèles, comme dans l'art antérieur.

Plus précisément, chaque chant 30a définit un creux 32a dans la paroi d'alvéole 18, ce creux étant ouvert dans la direction 4, en direction du réseau directement en regard dans l'empilement. Comme cela sera détaillé ci-après, la présence de ces creux 32a permet l'imbrication des premiers et seconds réseaux 2a, 2b, et donc l'obtention de la configuration en damier.

La maille 16a comporte par ailleurs une tige de jonction 28a qui s'étend en saillie à partir de l'un des sommets 24a, sensiblement dans la direction « L » et dans le plan de symétrie 17a, à savoir orthogonalement à la direction d'empilement 4.

En référence à présent à la figure 13, les mailles 16a sont répétées autant de fois que nécessaire pour l'obtention du réseau 2a. Pour ce faire, dans la direction « l », chaque face 20a d'une paroi d'alvéoles 18a est superposée à une face 20a d'une maille adjacente. D'autre part, dans l'autre direction « L », l'extrémité de la tige de jonction 28a est reliée à la maille adjacente, sur le sommet 24a dépourvu de tige.

D'ailleurs, pour la fabrication des réseaux 2a, 2b, il est noté que les matériaux envisagés sont les matériaux polymères et métalliques, tandis que les membranes 6 sont quant à elles préférentiellement réalisées dans un matériau polymère ou en papier.

Pour la fabrication des réseaux 2a, 2b, la technique d'usinage, bien que possible, n'est pas préférée. Deux autres techniques de fabrication sont privilégiées. Dans les deux cas, des options de partitionnement du réseau final peuvent être envisagées, spécialement si ses dimensions sont importantes.

La première technique est la technique d'injection, de préférence l'injection plastique. Compte tenu de la complexité géométrique des réseaux de circulation d'air, le partitionnement peut s'effectuer d'une part dans les directions « L » et « l », mais aussi spécialement dans le sens de la hauteur, correspondant à la direction 4. Aussi, un réseau complet peut être un assemblage de plusieurs pièces, par exemple par fixation mécanique, ou encore par soudure thermique.

L'injection métallique, en particulier l'injection d'aluminium, peut également être aussi envisagée, par exemple à l'aide d'un moule en sable. Ici aussi, un partitionnement est préféré pour l'obtention du réseau final, formant séparateur entre deux membranes directement consécutives dans l'empilement.

L'autre technique privilégiée est celle de la fabrication dite additive, ou encore impression 3D. Elle s'applique indifféremment pour l'obtention d'un réseau métallique ou dans un matériau polymère. Ici aussi, un partitionnement peut être envisagé, avant d'aboutir à un réseau final. A titre indicatif, il peut être procédé à l'impression 3D de pièces ou d'assemblages de pièces directement en matériaux polymères imper-respirants, où la membrane et le réseau de circulation d'air ne formeraient qu'une seule pièce.

En référence à présent aux figures 14 et 15, lorsque les membranes 6 et les réseaux 2a, 2b sont obtenus, ils sont empilés selon la direction 4. Comme évoqué précédemment, cet empilement s'effectue de manière à ce que les réseaux 2a, 2b soient imbriqués les uns dans les autres, grâce à la présence des creux 32a aux extrémités des parois d'alvéoles. Pour deux réseaux 2a, 2b directement consécutifs, l'imbrication souhaitée est obtenue en décalant les deux structures identiques d'un demi-pas de maille selon la direction de la largeur « l ». En tenant compte d'une part que la structure des deux réseaux 2a, 2b présente une même largeur selon la direction « l », et d'autre part que comme cela est représenté sur la figure 7, chacune d'elles présente une extrémité latérale constituée par des mailles entières, ainsi qu'une extrémité latérale opposée constituée de demi-mailles, le décalage désiré peut être facilement obtenu en plaçant le premier réseau 2a dans un sens et le second réseau 2b dans l'autre sens. Autrement dit, il suffit de retourner un réseau sur deux dans l'empilement, pour obtenir le décalage souhaité entre chaque étage dans cet empilement.

En procédant de la sorte, au niveau des chants 30a des mailles 16a du premier réseau, les creux 32a sont comblés en grande partie par les mailles 16b du réseau adjacent 2b. Plus précisément, chaque creux 32a d'un premier réseau 2a reçoit deux demi-parois de deux alvéoles adjacentes du second réseau 2b, ces deux demi-parois étant également reçues, à l'opposé, par le creux 32a appartenant au réseau 2a suivant dans l'empilement. Il en est de même pour chaque creux 32b d'un second réseau 2b qui reçoit deux demi-parois de deux alvéoles adjacentes du premier réseau 2a, ces deux demi-parois étant également reçues, à l'opposé, par le creux 32b appartenant au réseau 2b suivant dans l'empilement.

Il en découle que chaque canal 2b' du réseau 2b, dont l'un est grisé sur les figures 14 et 15, est délimité entre deux séries de creux 32a ouverts les uns en direction des autres, et dont la tenue mécanique est assurée par deux demi-mailles 16b adjacentes selon la direction « l ». Chaque canal 2b' est donc globalement délimité latéralement par les sommets 24b de deux mailles 16b directement consécutives, et délimité dans la direction de la hauteur par les sommets 24a de deux mailles 16a situées l'une au-dessus de l'autre dans l'empilement. Avec cet agencement, il est donc retrouvé la forme du canal 2b' en losange, dont les quatre coins correspondent respectivement aux quatre sommets 24b, 24b, 24a, 24a précités. Bien entendu, une géométrie analogue est également observée pour chaque canal 2a' du premier réseau de circulation d'air 2a.

En revanche, il est noté qu'aucun décalage n'est réalisé selon la direction « L » entre deux réseaux 2a, 2b directement consécutifs, comme cela est le mieux visible sur la figure 15. Les faces 20a sont donc alignées les unes avec les autres selon la direction 4, et espacées les unes des autres selon la direction « L » dans chaque canal 2a'. Il en est de même pour les faces 20b alignées les unes avec les autres selon la direction 4, et espacées les unes des autres selon la direction « L » dans chaque canal 2b'. La tranche amont de chacune de ces faces 20a, 20b, parallèles à la direction de circulation de l'air dans les canaux, provoque une recirculation de fluide qui optimise les échanges convectifs entre le flux d'air et les membranes.

De multiples aménagements de formes sont possibles sur les éléments décrits ci-dessus. Il peut par exemple s'agir des faces 20a dont trois exemples d'alternatives ont été représentées sur les figures 16a à 16c. Dans ces réalisations, les faces 20a ne sont plus pleines, mais ont été ajourées pour limiter les pertes de charges. Sur la figure 16a, l'ajour central est délimité par un cadre formant la face 20a. Sur les figures 16b et 16c, le cadre est équipé d'un renfort mécanique intérieur, en croix, afin d'améliorer la tenue mécanique du réseau supportant les membranes adjacentes.

Des solutions identiques ou analogues sont également possibles pour les faces 20b des parois d'alvéoles des seconds réseaux 2b.

Un assemblage de deux réseaux 2a, 2b, intégrant des faces 20a, 20b ajourées comme sur la figure 16a, a été représenté sur la figure 17. Dans cet assemblage, il est également prévu une longueur réduite des tiges de jonction 28a. Cette longueur de tige est en effet ajustable en fonction des besoins rencontrés, et peut donc également être augmentée si besoin, comme cela a été représenté sur le réseau 2a de la figure 18.

Les figures 19a à 19c montrent également différents angles possibles en vue selon la direction 4, au niveau du sommet 24a assurant la jonction entre la tige 28a et le couple de faces 22a. L'angle α1 et l'angle α2 sont de préférence toujours identiques, tandis que l'angle α3 entre les deux faces 22a du couple peut varier. Sur la première solution de la figure 19a, conduisant à une forme hexagonale parfaite en vue depuis la direction d'empilement 4, les angles α1, α2 et α3 sont égaux. Néanmoins, comme montré sur la figure 19b, l'angle α3 peut être supérieur aux angles α1, α2, de même que l'angle α3 peut être inférieur à ces mêmes angles α1, α2, comme cela a été représenté sur la figure 19c.

En référence à présent aux figures 20 à 26, il est montré un autre mode de réalisation préféré, dans lequel les réseaux 2a, 2b de circulation d'air sont obtenus à l'aide d'une maille différente. La maille 16a diffère de celle décrite précédemment par la forme des couples de faces 22a. En effet, lorsque vues dans la direction de la longueur « L », les faces ajourées 22a sont chacune en forme de triangle isocèle rectangle, l'angle droit se situant au niveau du sommet de raccordement 24a.

Aussi, lorsque les mailles 16a sont disposées de manière adjacente selon la direction « l », deux demi-mailles 16a directement consécutives forment un canal 2a' de section carrée. Cela conduit à une forme globale de damier pour les canaux 2a', 2b', comme cela est visible sur la figure 26.

En référence à présent aux figures 27 à 33, il est montré encore un autre mode de réalisation préféré, dans lequel les réseaux 2a, 2b de circulation d'air sont obtenus à l'aide d'une maille différente. La maille 16a diffère de celle décrite précédemment par la forme des couples de faces 22a. En effet, lorsque vues dans la direction de la longueur « L », les faces triangulaires 22a présentent un côté inférieur qui se situe dans le plan des tranches inférieures des faces opposées 20a. Le sommet 24a qui relie ces deux faces sont également agencés sur ce même plan, impliquant que la maille 16a ne présente plus de plan de symétrie orthogonal à la direction 4. Cela implique également que chaque réseau est uniquement structuré au niveau de l'une de ses surfaces inférieure ou supérieure, mais n'est plus structuré au niveau de ses deux surfaces opposées. En d'autres termes, les creux 32a sont uniquement présents en partie supérieure de la maille, mais plus en partie inférieure.

Avec cette configuration, il est fait en sorte que lorsque les mailles 16a sont disposées de manière adjacente selon la direction « l », deux demi-mailles 16a directement consécutives forment un canal 2a' de section triangulaire, plus précisément en forme de triangle équilatéral, comme cela est montré sur la figure 31. Cela ne conduit plus à une forme globale de damier pour les canaux 2a', 2b', mais plutôt à une disposition en quiconque des canaux 2a', 2b' de deux réseaux 2a, 2b directement consécutifs, comme cela est visible sur la figure 33. Dans ce cas de figure, l'imbrication des réseaux est presque totale, et elle s'effectue donc deux à deux. Cela signifie qu'entre chaque couple de réseaux imbriqués, la membrane 6 reste plane.

Les figures 34 à 38 montrent encore un autre mode de réalisation, dans lequel les réseaux 2a, 2b de circulation d'air sont obtenus à l'aide d'une maille différente, permettant l'obtention de canaux 2a', 2b' ondulés selon la direction « L ». Les canaux ne sont donc plus droits selon cette dernière direction comme dans les modes de réalisation précédents, mais ondulés de manière à augmenter encore davantage les surfaces d'échange. Naturellement, les membranes 6 agencées entre les réseaux 2a, 2b présentent également une telle ondulation, dans la direction d'empilement 4.

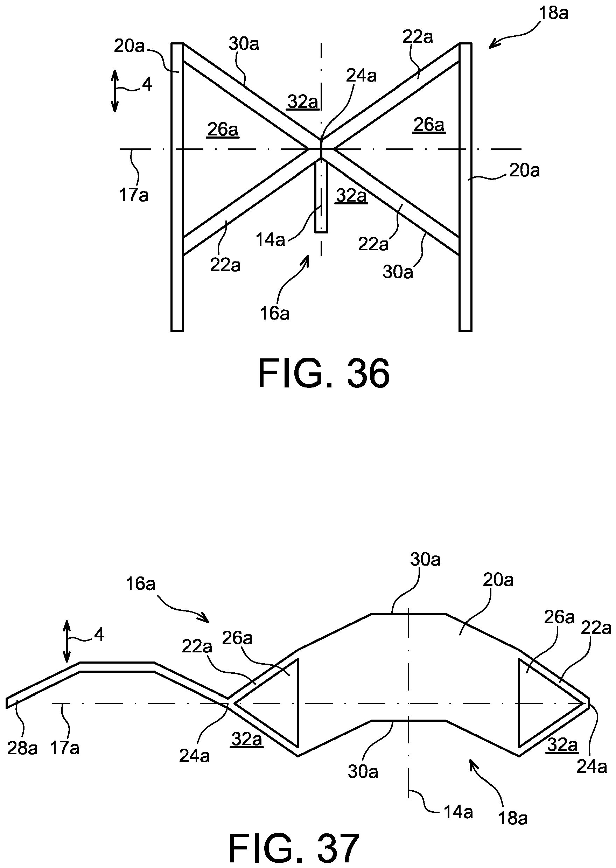

Pour ce faire, chaque maille 16a est également ondulée selon la direction 4, comme cela est le mieux visible sur la figure 37. Elle présente une tige de jonction 28a arrondie, ainsi que des faces opposées 20a présentant également une courbure au niveau de ses chants 30a. Pour chaque face 20a, il en découle un chant 30a concave, ainsi qu'un chant opposé 30a convexe définissant le creux 32a. Au sein d'un même réseau, les mailles 16a sont toutes placées dans le même sens, par exemple celui de la figure 34 avec les chants concaves 30a toujours orientés vers le haut.

Quelle que soit la conception retenue, il est noté que l'empilement présente par exemple vingt réseaux 2a, 2b superposés, et dix-neuf membranes 6 interposées entre ces réseaux. La hauteur maximale des canaux 2a', 2b' peut être de l'ordre de 5 mm, tandis que les épaisseurs des faces 20a, 22a et des tiges 28a peuvent être de l'ordre de 0,5 mm.

Comme évoqué ci-dessus en référence à la figure 1, l'échangeur 1 comporte, de part et d'autre de l'empilement 110, des distributeurs et collecteurs d'air coopérant avec les réseaux, de manière à assurer la distribution et la collecte des deux flux d'air A et B. De chaque côté de l'empilement 110 selon la direction « L », il est prévu un autre empilement dans lequel les distributeurs et les collecteurs sont agencés en alternance, selon la direction 4. Cette alternance est en effet retenue pour assurer la circulation à contre-courant au sein du de l'échangeur.

Tout comme pour les réseaux 2a, 2b, de chaque côté de l'empilement de ces réseaux, les distributeurs 112 et collecteurs 114 présentent des structures identiques, et sont empilés alternativement dans un sens puis dans l'autre, afin d'obtenir le décalage d'un demi-pas permettant leur imbrication. En revanche, pour chaque réseau, le collecteur et le distributeur associés à ce réseau diffèrent. En effet, l'entrée d'air rectangulaire 121a du distributeur et la sortie d'air rectangulaire 121b du collecteur, qui seront décrites ci-après, sont symétriquement opposées par rapport à l'axe médian de l'échangeur. Cela permet un équilibrage des chemins aérauliques pour une bonne irrigation de chaque canal.

Les figures 39 à 41 montrent un exemple de réalisation pour l'un des distributeurs d'air 112, de forme globale triangulaire. Ce distributeur 112 présente un corps creux triangulaire 120a avec une entrée d'air rectangulaire 121a sur l'un de ses côtés pour l'admission du flux A, et un volume intérieur 122a. Au niveau d'un autre côté du corps creux triangulaire 120a, il est prévu une rangée de passages d'air 124a débouchant dans le volume intérieur 122a, chaque passage 124a étant défini par une paroi 126a en losange ou en carré de forme complémentaire de celle des canaux 2a' présents au sein des réseaux 2a.

Comme cela a été montré sur les figures 42 et 43, l'extrémité distale des parois 126a est échancrée, de préférence en triangle en vue selon la direction d'empilement 4, de manière à s'emboiter correctement avec la structure du réseau associé 2a, et de sorte que chaque canal 2a' se trouve en regard de l'un des passages 124a. L'étanchéité peut être assurée par un joint (non représenté) cheminant sur la surface extérieure des parois 126a, de section du type signal en triangle. Le joint est alors placé en dessous ou au-dessus de la membrane 6 recouvrant cette surface extérieure de la rangée de parois 126a.

En référence aux figures 44 et 45, il est montré l'un des collecteurs 114 de conception identique à celle du distributeur 112, mais retourné de manière à s'emboîter avec ce dernier. Aussi, le collecteur d'air 114, de forme globale triangulaire, présente un corps creux triangulaire 120b avec une sortie d'air rectangulaire 121b sur l'un de ses côtés pour l'évacuation du flux B, et un volume intérieur 122b. Au niveau d'un autre côté du corps creux triangulaire 120b, il est prévu une rangée de passages d'air 124b débouchant dans le volume intérieur 122a, chaque passage 124b étant défini par une paroi 126b en losange ou en carré de forme complémentaire de celle des canaux 2b' présents au sein des réseaux 2b.

Grâce à sa position retournée par rapport au distributeur 112, les parois 126b en losange / carré du collecteur 114 s'imbriquent dans le creux définis entre les parois 126a en losange / carré du distributeur 112. Comme montré sur la figure 46, cela permet à chaque canal 2b' de se trouver en regard de l'un des passages d'air défini par les parois 126a. De plus, l'imbrication du collecteur 114 et du distributeur 112 permet d'assurer la compression du joint d'étanchéité précité, entre les surfaces extérieures en regard des parois 126a, 126b.

Bien entendu, diverses modifications peuvent être apportées par l'homme du métier à l'invention qui vient d'être décrite, uniquement à titre d'exemples non limitatifs.

## Revendications

1. Echangeur (1) à double flux d'air, permettant un transfert thermique et un transfert d'humidité entre les deux flux d'air, et comprenant une pluralité de premiers et seconds réseaux de circulation d'air (2a, 2b) empilés en alternance selon une direction d'empilement (4) et séparés deux à deux par des membranes (6) perméables à la vapeur d'eau et imperméables à l'air et à l'eau liquide, chacun des premiers et seconds réseaux de circulation d'air (2a, 2b) comprenant des alvéoles (12a, 12b) chacune définie par une paroi (18a, 18b) pourvue d'ouvertures pour le passage de l'air, ladite paroi d'alvéole comprenant deux chants opposés (30a, 30b) au niveau desquels ladite alvéole est ouverte dans la direction d'empilement (4),
**caractérisé en ce que** pour au moins l'un des premiers réseaux de circulation d'air (2a), au moins l'un des deux chants opposés (30a) de chaque paroi d'alvéole définit un creux (32a) ouvert en direction du second réseau de circulation d'air (2b) directement consécutif, lesdits creux (32a) logeant une partie de ce second réseau (2b).

2. Echangeur selon la revendication 1, **caractérisé en ce que** pour au moins l'un des seconds réseaux de circulation d'air (2b), au moins l'un des deux chants opposés (30b) de chaque paroi d'alvéole définit un creux (32b) ouvert en direction du premier réseau de circulation d'air (2a) directement consécutif, lesdits creux (32b) logeant une partie de ce premier réseau (2a).

3. Echangeur selon la revendication 1 ou la revendication 2, **caractérisé en ce que** les deux chants opposés (30a, 30b), de chaque paroi d'alvéole (18a, 18b) d'au moins l'un des réseaux de circulation (2a, 2b), définissent chacun un creux (32a, 32b) ouvert en direction du réseau directement consécutif, et logeant une partie de ce réseau directement consécutif.

4. Echangeur selon l'une quelconque des revendications précédentes, **caractérisé en ce que** les premiers et seconds réseaux de circulation d'air (2a, 2b) présentent des structures identiques, et **en ce que** pour au moins un premier et un second réseaux (2a, 2b) directement consécutifs dans l'empilement, la structure du premier réseau (2a) est décalée de la structure du second réseau (2b) dans le plan orthogonal à la direction d'empilement (4), pour permettre aux creux (32a) du premier réseau (2a) de loger une partie du second réseau (2b), et réciproquement.

5. Echangeur selon l'une quelconque des revendications précédentes, **caractérisé en ce que** chaque premier et second réseau de circulation d'air (2a, 2b) est réalisé à partir d'une maille (16a, 16b) qui est répétée, la maille comprenant ladite paroi d'alvéole (18a, 18b).

6. Echangeur selon la revendication 5, **caractérisé en ce que** la maille (16a, 16b) comporte également une tige (28a, 28b) de jonction des alvéoles.

7. Echangeur selon la revendication 5 ou la revendication 6, **caractérisé en ce que** la maille (16a, 16b) est identique pour les premiers et seconds réseaux de circulation d'air (2a, 2b).

8. Echangeur selon l'une quelconque des revendications précédentes, **caractérisé en ce que** chaque premier et second réseau de circulation d'air (2a, 2b) présente un plan de symétrie (17a) orthogonal à la direction d'empilement (4).

9. Echangeur selon l'une quelconque des revendications précédentes, **caractérisé en ce que** les alvéoles (12a, 12b) sont cylindriques de section non circulaire et d'axes (14a, 14b) parallèles à ladite direction d'empilement (4).

10. Echangeur selon l'une quelconque des revendications précédentes, **caractérisé en ce que** ladite paroi d'alvéole (18a, 18b) présente une forme globale hexagonale lorsqu'elle est vue selon la direction d'empilement (4).

11. Echangeur selon la revendication 10, **caractérisé en ce que** ladite paroi d'alvéole (18a, 18b) présente six faces, dont deux faces opposées (20a, 20b) agencées sensiblement parallèlement à une direction principale de circulation de l'air à travers le réseau concerné, et deux couples de deux faces (22a, 22b) traversées par l'air, les deux couples étant reliés par lesdites deux faces opposées (20a, 20b).

12. Echangeur selon la revendication 11, **caractérisé en ce que** chaque couple comporte deux faces (22a, 22b) de forme globale triangulaire, les deux faces étant reliées l'une à l'autre par l'un de leurs sommets (24a, 24b).

13. Echangeur selon la revendication 12 combinée à la revendication 6, **caractérisé en ce que** la tige de jonction (28a, 28b) est reliée audit sommet (24a, 24b), à partir duquel elle fait saillie de préférence dans un plan orthogonal à la direction d'empilement (4).

14. Echangeur selon l'une quelconque des revendications 11 à 13, **caractérisé en ce que** lesdites deux faces opposées (20a, 20b) de la paroi d'alvéole (18a, 18b) sont pleines ou ajourées.

15. Echangeur selon l'une quelconque des revendications précédentes, **caractérisé en ce qu'**il comprend, associés à chaque réseau de circulation d'air (2a, 2b), un distributeur d'air (112) ainsi qu'un collecteur d'air (114), lesdits distributeurs et collecteurs étant empilés selon ladite direction d'empilement (4).

## Patentansprüche

1. Tauscher (1) mit doppeltem Luftstrom, der einen Wärmetransfer und einen Feuchtigkeitstransfer zwischen den beiden Luftströmen ermöglicht und eine Mehrzahl von ersten und zweiten Luftzirkulationsnetzen (2a, 2b) umfasst, die entlang einer Stapelungsrichtung (4) abwechselnd gestapelt und paarweise durch Membrane (6) getrennt sind, die für Wasserdampf durchlässig und für Luft und flüssiges Wasser undurchlässig sind, wobei jedes der ersten und zweiten Luftzirkulationsnetze (2a, 2b) Zellen (12a, 12b) aufweist, die jeweils von einer Wand (18a, 18b) definiert werden, die mit Öffnungen für den Luftdurchtritt versehen ist, wobei die Zellwand zwei entgegengesetzte Kanten (30a, 30b) aufweist, bei denen die Zelle in Stapelungsrichtung (4) offen ist,
**dadurch gekennzeichnet, dass** zumindest bei einem der ersten Luftzirkulationsnetze (2a) zumindest eine der beiden entgegengesetzten Kanten (30a) einer jeden Zellwand einen Hohlraum (32a) definiert, der in Richtung des direkt darauf folgenden zweiten Luftzirkulationsnetzes (2b) offen ist, wobei die Hohlräume (32a) einen Teil dieses zweiten Netzes (2b) aufnehmen.

2. Tauscher nach Anspruch 1, **dadurch gekennzeichnet, dass** bei zumindest einem der beiden zweiten Luftzirkulationsnetze (2b) zumindest eine der beiden entgegengesetzten Kanten (30b) einer jeden Zellwand einen Hohlraum (32b) definiert, der in Richtung des direkt darauf folgenden ersten Luftzirkulationsnetzes (2a) offen ist, wobei die Hohlräume (32b) einen Teil dieses ersten Netzes (2a) aufnehmen.

3. Tauscher nach Anspruch 1 oder Anspruch 2, **dadurch gekennzeichnet, dass** die beiden entgegengesetzten Kanten (30a, 30b) von jeder Zellwand (18a, 18b) zumindest eines der Zirkulationsnetze (2a, 2b) jeweils einen Hohlraum (32a, 32b) definieren, der in Richtung des direkt darauf folgenden Netzes offen ist und einen Teil dieses direkt folgenden Netzes aufnimmt.

4. Tauscher nach einem der vorangehenden Ansprüche, **dadurch gekennzeichnet, dass** die ersten und die zweiten Luftzirkulationsnetze (2a, 2b) identische Strukturen aufweisen und dass bei zumindest einem ersten und einem zweiten Netz (2a, 2b), die in der Stapelung direkt aufeinander folgen, die Struktur des ersten Netzes (2a) zur Struktur des zweiten Netzes (2b) in der Ebene orthogonal zur Stapelungsrichtung (4) versetzt ist, um den Hohlräumen (32a) des ersten Netzes (2a) zu gestatten, einen Teil des zweiten Netzes (2b) aufzunehmen, und umgekehrt.

5. Tauscher nach einem der vorangehenden Ansprüche, **dadurch gekennzeichnet, dass** jedes erste und zweite Luftzirkulationsnetz (2a, 2b) ausgehend von einer sich wiederholenden Masche (16a, 16b) ausgebildet ist, wobei die Masche die Zellwand (18a, 18b) enthält.

6. Tauscher nach Anspruch 5, **dadurch gekennzeichnet, dass** die Masche (16a, 16b) auch einen Verbindungssteg (28a, 28b) zum Verbinden der Zellen enthält.

7. Tauscher nach Anspruch 5 oder Anspruch 6, **dadurch gekennzeichnet, dass** die Masche (16a, 16b) für die ersten und die zweiten Luftzirkulationsnetze (2a, 2b) identisch ist.

8. Tauscher nach einem der vorangehenden Ansprüche, **dadurch gekennzeichnet, dass** jedes erste und zweite Luftzirkulationsnetz (2a, 2b) eine Symmetrieebene (17a) orthogonal zur Stapelungsrichtung (4) aufweist.

9. Tauscher nach einem der vorangehenden Ansprüche, **dadurch gekennzeichnet, dass** die Zellen (12a, 12b) zylindrisch mit nicht kreisrundem Querschnitt sind und mit ihren Achsen (14a, 14b) parallel zur Stapelungsrichtung (4) verlaufen.

10. Tauscher nach einem der vorangehenden Ansprüche, **dadurch gekennzeichnet, dass** die Zellwand (18a, 18b) bei Anbetracht in Stapelungsrichtung (4) sechseckförmig ist.

11. Tauscher nach Anspruch 10, **dadurch gekennzeichnet, dass** die Zellwand (18a, 18b) sechs Seiten aufweist, von denen zwei entgegengesetzte Seiten (20a, 20b) im Wesentlichen parallel zu einer Luftzirkulationshauptrichtung durch das betreffende Netz angeordnet sind und zwei Paare von zwei Seiten (22a, 22b) von der Luft durchströmt werden, wobei die beiden Paare durch die beiden entgegengesetzten Seiten (20a, 20b) verbunden sind.

12. Tauscher nach Anspruch 11, **dadurch gekennzeichnet, dass** jedes Paar zwei dreieckförmige Seiten (22a, 22b) aufweist, wobei die beiden Seiten an einer ihrer Spitzen (24a, 24b) miteinander verbunden sind.

13. Tauscher nach Anspruch 12 in Kombination mit Anspruch 6, **dadurch gekennzeichnet, dass** der Verbindungssteg (28a, 28b) mit der Spitze (24a, 24b) verbunden ist, von der aus er vorzugsweise in eine orthogonal zur Stapelungsrichtung (4) verlaufende Ebene vorspringt.

14. Tauscher nach einem der Ansprüche 11 bis 13, **dadurch gekennzeichnet, dass** die beiden entgegengesetzten Seiten (20a, 20b) der Zellwand (18a, 18b) voll oder unterbrochen ausgeführt sind.

15. Tauscher nach einem der vorangehenden Ansprüche, **dadurch gekennzeichnet, dass** er jedem Luftzirkulationsnetz (2a, 2b) zugeordnet einen Luftverteiler (112) sowie einen Luftsammler (114) enthält, wobei die Verteiler und die Sammler in Stapelungsrichtung (4) gestapelt sind.

## Claims

1. Dual air flow exchanger (1), allowing for a heat transfer and a humidity transfer between the two air flows, and comprising a plurality of first and second air circulation networks (2a, 2b) stacked alternately according to a direction of stacking (4) and separated two-by-two by membranes (6) permeable to water vapour and impermeable to air and to liquid water, each one of the first and second air circulation networks (2a, 2b) comprising cells (12a, 12b) each defined by a wall (18a, 18b) provided with openings for the passage of air, said cell wall comprising two opposing edges (30a, 30b) on which said cell is open in the direction of stacking (4),
**characterised in that** for at least one of the first air circulation networks (2a), at least one of the two opposing edges (30a) of each cell wall defines a hollow (32a) open in the direction of the second directly consecutive air circulation network (2b), said hollows (32a) receiving a part of this second network (2b).

2. Exchanger according to claim 1, **characterised in that** for at least one of the second air circulation networks (2b), at least one of the two opposing edges (30b) of each cell wall defines a hollow (32b) open in the direction of the first directly consecutive air circulation network (2a), said hollows (32b) receiving a part of this first network (2a).

3. Exchanger according to claim 1 or claim 2, **characterised in that** the two opposing edges (30a, 30b), of each cell wall (18a, 18b) of at least one of the circulation networks (2a, 2b), each defining a hollow (32a, 32b) open in the direction of the directly consecutive network, and receiving a part of this directly consecutive network.

4. Exchanger as claimed in any preceding claim, **characterised in that** the first and second air circulation networks (2a, 2b) each have identical structures, and **in that** for at least one first and one second directly consecutive networks (2a, 2b) in the stacking, the structure of the first network (2a) is shifted from the structure of the second network (2b) in the plane orthogonal to the direction of stacking (4), in order to allow the hollows (32a) of the first network (2a) to receive a part of the second network (2b), and reciprocally.

5. Exchanger as claimed in any preceding claim, **characterised in that** each first and second air circulation network (2a, 2b) is carried out using a mesh (16a, 16b) which is repeated, the mesh comprising said cell wall (18a, 18b).

6. Exchanger according to claim 5, **characterised in that** the mesh (16a, 16b) also comprises a connecting rod (28a, 28b) of the cells.

7. Exchanger according to claim 5 or claim 6, **characterised in that** the mesh (16a, 16b) is identical for the first and second air circulation networks (2a, 2b).

8. Exchanger as claimed in any preceding claim, **characterised in that** each first and second air circulation network (2a, 2b) have a plane of symmetry (17a) orthogonal to the direction of stacking (4).

9. Exchanger as claimed in any preceding claim, **characterised in that** the cells (12a, 12b) are cylindrical with a non-circular section and axes (14a, 14b) parallel to said direction of stacking (4).

10. Exchanger as claimed in any preceding claim, **characterised in that** said cell wall (18a, 18b) has a global hexagon shape when it is viewed according to the direction of stacking (4).

11. Exchanger according to claim 10, **characterised in that** said cell wall (18a, 18b) has six faces, of which two opposite faces (20a, 20b) arranged substantially parallel to a main direction of circulation of air through the network concerned, and two pairs of two faces (22a, 22b) passes through the air, with the two pairs being connected by said two opposite faces (20a, 20b).

12. Exchanger according to claim 11, **characterised in that** each pair comprises two faces (22a, 22b) of a globally triangular shape, with the two faces being connected to one another by one of their vertices (24a, 24b).

13. Exchanger according to claim 12 combined with claim 6, **characterised in that** the connecting rod (28a, 28b) is connected to said vertex (24a, 24b), from which it protrudes preferably in a plane orthogonal to the direction of stacking (4).

14. Exchanger according to any of claims 11 to 13, **characterised in that** said two opposite faces (20a, 20b) of the cell wall (18a, 18b) are solid or perforated.

15. Exchanger as claimed in any preceding claim, **characterised in that** it comprises, associated with each air circulation network (2a, 2b), an air distributor (112) as well as an air collector (114), with said distributors and collectors being stacked according to said direction of stacking (4).
